# FASCICULE DE BREVET EUROPEEN

(11) **EP 2 936 256 B1**
(45) Date de publication et mention de la délivrance du brevet: **10.08.2022**
(21) Numéro de dépôt: 13818316.5
(22) Date de dépôt: 16.12.2013
(51) Int. Cl.: G05B 15/02, E06B 9/00, E06B 9/24, G01C 21/02, G05B 13/04

(54) **PROCÉDÉ DE COMMANDE D'UN ACTIONNEUR POUR UN ÉQUIPEMENT MOBILE DU BÂTIMENT**
VERFAHREN ZUR STEUERUNG EINES STELLANTRIEBS FÜR EIN MOBILES OBJEKT EINER ANLAGE IN EINEM GEBÄUDE
METHOD OF CONTROLLING AN ACTUATOR FOR A MOBILE ITEM OF EQUIPMENT IN BUILDING

(30) Priorité: 21.12.2012 FR 1262551
(43) Date de publication de la demande: 28.10.2015
(73) Titulaire: SOMFY ACTIVITES SA, 74300 Cluses (FR)
(72) Inventeur: LAGARDE, Eric, F-74700 Sallanches (FR); DUPIELET, Norbert, F-74700 Sallanches (FR); MARAVAL, Frédéric, F-74190 Passy (FR); ROUSSEAU, Fabien, F-74440 Mieussy (FR); CAVAREC, Pierre Emmanuel, F-74130 Mont Saxonnex (FR); GERINIERE, Pierre, F-74300 Cluses (FR); NEUMAN, Serge, F-74600 Seynod (FR)
(74) Mandataire: Germain Maureau
(86) Numéro de dépôt international: PCT/FR2013/053105
(87) Numéro de publication internationale: WO 2014/096664

(56) Documents cités:
- WO-A1-2012/073161
- DE-A1-102005 032 550
- US-A1- 2005 213 082
- US-B1- 6 264 111
- Zakharov, Mikhail: "Locating Geographical Coordinates Using Observations over the Sun and Polaris Positions", Internet, 1 janvier 2012 (2012-01-01), XP002712117, Extrait de l'Internet: URL:http://www.forskningsradet.no/servlet/ Satellite?blobcol=urldata&blobheader=appli cation%2Fpdf&blobheadername1=Content-Dispo sition%3A&blobheadervalue1=+attachment%3B+ filename%3D%22ZakharovMikhail.pdf%22&blobk ey=id&blobtable=MungoBlobs&blobwhere=12744 91693244&ssbinary=true [extrait le 2013-09-02]
- CAPPE O ET AL: "An Overview of Existing Methods and Recent Advances in Sequential Monte Carlo", PROCEEDINGS OF THE IEEE, IEEE. NEW YORK, US, vol. 95, no. 5, 1 May 2007 (2007-05-01), pages 899-924, XP011186717, ISSN: 0018-9219, DOI: 10.1109/JPROC.2007.893250

## Description

La présente invention concerne le domaine de l'immotique.

En particulier, la présente invention a pour objet un procédé de commande d'un actionneur pour un équipement mobile du bâtiment ainsi qu'un actionneur d'un équipement mobile du bâtiment agencé pour mettre en œuvre un tel procédé de commande.

Un procédé similaire est divulgué dans DE 10 2005 032 550 A1.

Un procédé de détermination de coordonnées géographiques à partir d'observations du soleil est connu de Zakharov, Mikhail: "Locating Geographical Coordinates Using Observations over the Sun and Polaris Positions".

US 6 264 111 B1 divulgue un procédé de commande sur la base d'un modèle d'une pièce.

Pour définir le fonctionnement de l'actionneur associé à un équipement mobile du bâtiment, un ensemble de paramètres relatifs à l'environnement de l'équipement et de l'actionneur doivent être définis.

A titre d'exemple, il peut être souhaitable de connaître la luminosité ou la température, ainsi que l'heure courante pour définir une commande appropriée. En conséquence, pour permettre d'obtenir une commande précise, il est nécessaire d'équiper l'actionneur de capteurs destinés à collecter des données de mesures ou d'autres équipements comme une horloge permettant de déterminer la valeur des paramètres et les scénarios de commandes devant être appliqués.

La multiplication de ces composants conduit à complexifier la constitution de l'actionneur et nécessite par ailleurs des réglages et une calibration.

La présente invention a pour but de résoudre tout ou partie des inconvénients mentionnés ci-dessus.

A cet effet, la présente invention a pour objet un procédé de commande d'un actionneur pour un équipement mobile du bâtiment selon la revendication 1.

Grâce aux dispositions selon l'invention, une adaptation des paramètres, définissant le modèle, est réalisée en fonction d'un ensemble de mesures s'étendant sur un intervalle de temps, de façon à assurer une plus grande précision de la commande de l'équipement mobile en correspondance avec son environnement ou bien d'adapter son fonctionnement en vue d'optimiser son confort d'utilisation.

Ces dispositions permettent également de limiter le nombre de types de grandeurs physiques caractéristiques à mesurer, grâce aux informations collectées sur l'évolution temporelle de la ou des grandeurs physiques caractéristiques mesurées.

L'utilisation d'un modèle permet de s'affranchir d'une étape de calibration basée sur une utilisation empirique de l'actionneur par un utilisateur, ce modèle théorique ou prédéterminé définissant une évolution temporelle modélisée fournissant un ensemble de valeurs théoriques sur une période de temps donnée.

Selon l'invention, l'ensemble de valeurs de mesure comprend des valeurs de mesure collectées par un capteur physique.

Selon l'invention, l'ensemble de valeurs de mesure comprend des valeurs de mesure relatives à des actions de l'utilisateur.

Selon l'invention, les valeurs de mesure relatives à des actions de l'utilisateur correspondent à des instructions de commande saisies par l'utilisateur.

Ces dispositions permettent de déduire l'au moins une grandeur physique en fonction du comportement de l'utilisateur relativement à la commande de l'équipement mobile.

Ainsi, les instructions de l'utilisateur peuvent être considérées soit comme des valeurs de mesure permettant de déterminer initialement un fonctionnement de l'actionneur, soit comme un élément permettant de corriger une loi de commande établie pour le fonctionnement de l'actionneur.

Selon une mise en œuvredu procédé, le modèle utilisé prend en compte au moins une modélisation harmonique de l'évolution de l'au moins une grandeur physique caractéristique.

Ces dispositions permettent de tenir compte de la périodicité ou de la pseudo-périodicité de l'évolution de l'au moins une grandeur physique caractéristique. En particulier, les différentes périodes superposées peuvent correspondre à des alternances diurnes, et/ou à des alternances annuelles et/ou à des alternances sur quelques jours.

Selon une mise en œuvredu procédé, l'ensemble des valeurs de mesure comprend des valeurs correspondant à une grandeur physique caractéristique d'ensoleillement / de puissance solaire reçue et/ou de température ambiante.

Selon une mise en œuvredu procédé, l'au moins un paramètre correspond à une estimation d'une position géographique, et/ou d'une orientation par rapport à un référentiel géographique, et/ou de l'heure ou de la date.

Selon l'invention, l'étape c) comprend l'utilisation d'un algorithme probabiliste.

L'utilisation d'un algorithme de type probabiliste permet de prendre en compte des ensembles massifs de données de mesure comprenant potentiellement des données de mesures aberrantes pour définir une estimation satisfaisante des paramètres du modèle.

Selon une mise en œuvredu procédé, l'algorithme probabiliste comprend un algorithme évolutionnaire, notamment de type génétique, comprenant une étape de définition d'une population d'individus, chaque individu correspondant à une structure de données regroupant des valeurs potentielles de l'au moins un paramètre.

Selon un mode de mise en œuvredu procédé, l'algorithme évolutionnaire comprend une étape d'évaluation d'une fonction de performance correspondant au calcul d'un écart entre :
- une évolution temporelle modélisée de l'au moins une grandeur caractéristique (C) définie à partir de l'application du modèle à l'au moins une valeur potentielle de l'au moins un paramètre, d'une part, et
- l'évolution temporelle observée de la grandeur physique caractéristique déterminée à partir de l'ensemble des valeurs de mesure, d'autre part.

Selon une mise en œuvredu procédé, l'algorithme probabiliste comprend un algorithme du type recuit simulé.

Selon une mise en œuvredu procédé, l'algorithme probabiliste comprend une inférence bayésienne.

Selon une mise en œuvredu procédé, l'algorithme probabiliste comprend une phase d'apprentissage initiale consistant à pondérer l'ensemble des valeurs de mesure de l'au moins une grandeur caractéristique.

Selon une mise en œuvredu procédé, l'étape c) comprend une étape de traitement du signal, en particulier une étape de filtrage ou de calcul de dérivée, sur l'ensemble de valeurs de mesure de l'au moins une grandeur caractéristique.

Selon un aspect de l'invention, l'étape c) comprend une étape de calcul de la déviation de motifs d'un signal formé par l'ensemble des valeurs de mesure présentant une périodicité donnée.

Selon un aspect de l'invention, l'étape de traitement du signal et/ou l'étape de calcul de déviation des motifs est réalisée préalablement à l'application d'un algorithme probabiliste.

Selon une mise en œuvredu procédé, la définition d'un fonctionnement de l'actionneur comprend la définition d'une commande de positionnement de l'équipement mobile.

Selon une mise en œuvredu procédé, la correction de la définition d'une commande de positionnement correspond à la correction d'un horaire de déclenchement d'une commande de positionnement, en particulier d'une commande d'ouverture d'un équipement mobile.

Selon une mise en œuvredu procédé, l'étape d) comprend les étapes consistant à :
- déterminer une orientation relative de l'équipement mobile par rapport au soleil en fonction de l'au moins une valeur de paramètre ;
- appliquer une commande de positionnement de l'équipement mobile en fonction de l'orientation relative déterminée.

Selon une mise en œuvredu procédé, la définition d'un fonctionnement de l'actionneur comprend la définition d'une commande de la variation d'une vitesse de l'actionneur.

La présente invention a également pour objet un actionneur d'un équipement mobile du bâtiment agencé pour mettre en œuvreun procédé de commande tel que décrit ci-dessus comprenant un capteur et/ou une interface utilisateur agencé pour collecter des valeurs de mesure de l'au moins une grandeur physique caractéristique.

De toute façon, l'invention sera bien comprise à l'aide de la description qui suit, en référence au dessin schématique annexé représentant, à titre d'exemple non limitatif, les étapes d'un procédé selon l'invention ainsi qu'un actionneur mettant en œuvrece procédé.

La figure 1 est un schéma synoptique des étapes du procédé selon l'invention.

La figure 2 illustre un actionneur pour un équipement mobile du bâtiment, l'actionneur comprenant un capteur de température.

La figure 3 est un graphique illustrant un exemple de collecte d'un ensemble de valeurs de mesure représentatives de l'ensoleillement réalisé au cours d'un intervalle de mesure déterminé.

La figure 4 est un graphique illustrant un exemple de collecte d'un ensemble de valeurs de mesure de température réalisé au cours d'un intervalle de mesure déterminé.

La figure 5 est un graphique illustrant un autre exemple de collecte d'un ensemble de valeurs de mesure représentatives de l'ensoleillement réalisé au cours d'un intervalle de mesure déterminé.

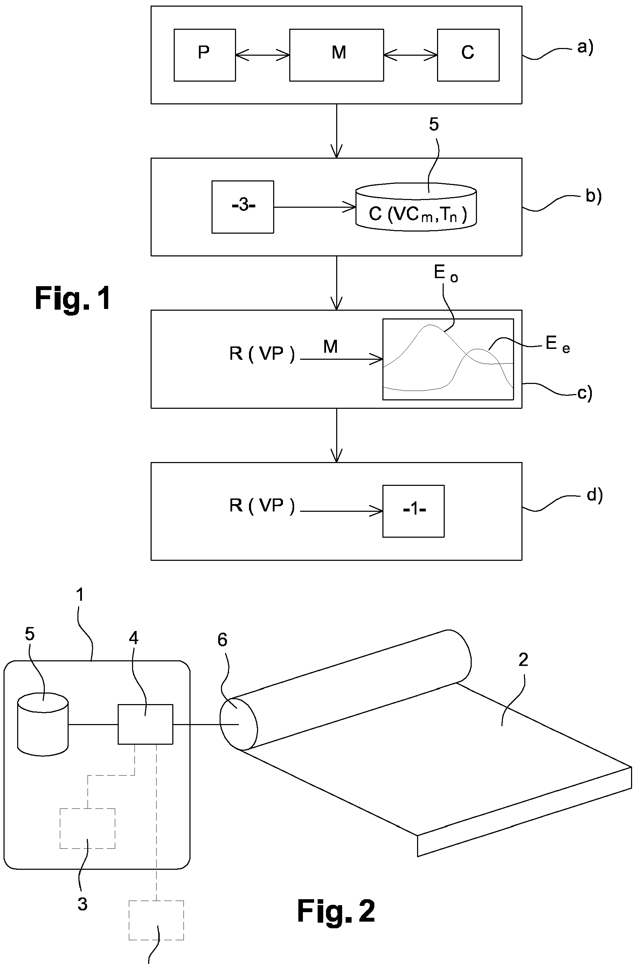

Comme cela est représenté de façon schématique sur la figure 2, un actionneur 1 d'un équipement mobile 2 du bâtiment comprend un moteur 6 destiné à appliquer une consigne de positionnement à un équipement mobile du bâtiment 2, et une unité ou autres moyens de contrôle ou de traitement de données 4 permettant de traiter les données en provenance d'un capteur 3 et de déterminer une consigne de positionnement devant être appliquée par le moteur 6.

Le capteur 3 est destiné à collecter des valeurs de mesures VCm d'au moins une grandeur physique caractéristique C de l'environnement de l'actionneur 1.

Le capteur 3 peut être intégré dans l'actionneur 1 ou bien être une entité à part entière dialoguant avec l'actionneur 1.

L'unité de contrôle 4 est associée à une ou plusieurs mémoires de stockage 5.

Il est à noter que par équipement mobile, on peut notamment entendre des volets pour fenêtre, par exemple des volets présentant des battants, des volets roulants, des stores vénitiens intérieurs et/ou extérieurs ou encore des fenêtres ou trappes de ventilation naturelle.

L'au moins une grandeur physique caractéristique C de l'environnement de l'équipement mobile considérée présente une évolution temporelle E, et peut être par exemple la température, un ensoleillement ou une puissance solaire ou bien toute autre grandeur physique susceptible de pouvoir être mesurée par un capteur physique 3 et/ou lié à des saisies renseignées par l'intermédiaire d'une interface utilisateur.

L'interface utilisateur permet de saisir directement des valeurs de mesure d'une grandeur physique caractéristique C de l'environnement ou du fonctionnement de l'actionneur 1 ou bien de saisir un contre ordre manuel lors de l'exécution d'une instruction de commande automatisée de l'actionneur 1.

Comme illustré à la figure 1, un procédé de commande de l'actionneur 1 comprend une première étape a) consistant à disposer d'un modèle M reliant au moins un paramètre P de modélisation à l'au moins une grandeur physique caractéristique C de l'environnement ou du fonctionnement de l'actionneur 1 présentant une évolution temporelle E.

L'au moins un paramètre P relié à l'environnement de l'actionneur 1 peut par exemple correspondre à :
- des coordonnées géographiques du capteur 3, en particulier sa latitude et sa longitude,
- l'orientation du capteur 3 par rapport au soleil,
- le temps universel.

Dans le cas d'un équipement mobile 2 du bâtiment constitué par un ouvrant, et dans le cas où l'ouvrant est susceptible d'occulter occasionnellement le capteur 3, alors l'au moins un paramètre P peut également correspondre à :
- une résistance thermique de l'ouvrant 2, et/ou
- un instant d'ouverture ou de fermeture probable de l'ouvrant 2.

L'au moins un paramètre P relié au fonctionnement de l'actionneur 1 peut par exemple correspondre à :
- la présence d'un ou plusieurs points durs au cours du déroulement ou de l'enroulement de l'équipement mobile 2,
- à un ordre manuel d'un utilisateur en l'absence d'ordre automatique d'ouverture/fermeture d'un ouvrant 2.

Le modèle M utilisé peut présenter différents types mathématiques ou physiques aptes à établir une relation entre l'au moins un paramètre P de modélisation et l'au moins une grandeur physique caractéristique C de l'environnement de l'actionneur 1 présentant une évolution temporelle E, et en particulier une évolution temporelle périodique, pseudopériodique ou harmonique.

Le procédé comprend ensuite une deuxième étape b) consistant à collecter un ensemble de valeurs de mesure VCm relatives à l'au moins une grandeur physique caractéristique C de l'environnement de l'actionneur au cours d'un intervalle de mesure Tm, chaque valeur de mesure VCm étant associée à un instant tm de l'intervalle de mesure Tm.

Dans le cas où l'au moins une grandeur physique caractéristique C de l'environnement de l'actionneur 1 comprend une ou plusieurs actions d'un utilisateur, ces valeurs de mesure VCm peuvent par exemple correspondre à des valeurs horodatées de saisie fournies par l'utilisateur par l'intermédiaire de l'interface utilisateur au cours d'un intervalle de saisie Tm.

Ainsi, les valeurs de mesure VCm collectées au cours de l'intervalle de mesure Tm sont stockées dans les moyens de stockage 5 en association avec leur instant tm de mesure compris dans cet intervalle de mesure Tm.

Ces valeurs de mesure VCm permettent de mettre en évidence une évolution temporelle observée Eo de la grandeur physique caractéristique C.

L'intervalle de mesure Tm est compris dans la période au cours de laquelle l'au moins une grandeur physique caractéristique C de l'environnement de l'actionneur 1 présente une évolution temporelle E.

Le procédé comprend ensuite une troisième étape c) consistant à déterminer ou corriger au moins une valeur VP de l'au moins un paramètre P de modélisation de manière à ce qu'une évolution temporelle modélisée ou estimée Ee définie à partir de l'application du modèle M à l'au moins une valeur VP de paramètre P de modélisation corresponde à ou se rapproche d'une évolution temporelle observée Eo de la grandeur physique caractéristique C déterminée à partir de l'ensemble des valeurs de mesure VCm.

La première valeur VP peut également être déterminée ou corrigée.

La première valeur VP est déterminée lorsque le paramètre P pouvant influencer l'évolution temporelle modélisée ou estimée Ee n'est pas encore défini.

La première valeur VP est corrigée lorsque le paramètre P pouvant influencer l'évolution temporelle modélisée ou estimée Ee est prédéfini, la première valeur VP peut alors correspondre à une valeur prédéterminée prise par défaut.

Une fois la première valeur VP de l'au moins un paramètre P déterminé, les valeurs VP suivantes de l'au moins un paramètre P correspondent à des corrections des valeurs VP précédentes de l'au moins un paramètre P.

Comme signalé précédemment, l'étape b) permet de mettre en évidence une évolution temporelle observée Eo de la grandeur physique caractéristique C à partir des valeurs de mesures VCm effectuées par le capteur 3.

L'application du modèle M défini à l'étape a) à des valeurs VP de paramètres P permet quant à elle de mettre en évidence une évolution temporelle modélisée ou estimée Ee de la grandeur physique caractéristique C.

L'étape c) consiste donc à faire varier l'au moins une valeur VP de l'au moins un paramètre P de modélisation jusqu'à ce que l'évolution temporelle modélisée ou estimée Ee corresponde à ou se rapproche de l'évolution temporelle observée Eo.

L'au moins une valeur VP de l'au moins un paramètre P peut influer sur un décalage temporel entre l'évolution temporelle modélisée ou estimée Ee et l'évolution temporelle mesurée Eo mais peut également influer sur l'amplitude des valeurs modélisées de la grandeur caractéristique C.

Avantageusement, à ce stade le procédé comprend une étape de traitement du signal, en particulier une étape de filtrage ou de calcul de dérivée, sur l'ensemble des valeurs de mesures Vm de l'au moins une grandeur caractéristique C.

Les traitements effectués peuvent notamment consister à :
- appliquer un filtre passe haut pour déterminer la « rugosité » du signal constitué par les valeurs de mesure VCm ;
- appliquer un filtre passe-bas de façon à repérer dans le signal les alternances diurnes ; et/ou
- procéder à un calcul de dérivée sur une courbe déduite des valeurs de mesure VCm de façon à repérer des ruptures de pentes.

Dans une étape ultérieure, un calcul de la moyenne et de l'écart type des déviations des motifs d'une périodicité de 24 heures peut être réalisé.

Ces premiers calculs permettent de définir des premières valeurs potentielles VP estimées pour les paramètres P du modèle M.

Compte tenu de l'ensemble massif des données utilisées ainsi que des erreurs de mesure pouvant survenir et de la qualité du capteur 3 utilisé, la détermination et la correction de l'au moins une valeur VP de l'au moins un paramètre P utilise de préférence un algorithme probabiliste plutôt qu'un algorithme déterministe pour préciser les données obtenues.

En particulier, un algorithme évolutionnaire, notamment de type génétique, peut être mis en œuvrepour déterminer ou corriger l'au moins une valeur VP de l'au moins un paramètre P.

A cet effet, une population d'individus I doit être définie, chaque individu correspondant à une structure de données regroupant au moins une valeur potentielle VPp de l'au moins un paramètre P. Si plusieurs paramètres P sont définis, plusieurs valeurs potentielles VPp sont définies, par exemple une par paramètre P.

La définition de cette population peut être définie, pour une première génération d'individus, par un tirage aléatoire de valeurs en prenant en considération des valeurs de départ prédéfinies par les calculs de type traitement du signal sur les valeurs de mesure collectées VCm.

A partir de cette population initiale, une fonction de performance est évaluée pour chaque individu.

Cette fonction de performance peut correspondre notamment au calcul d'un écart, par exemple d'un écart quadratique entre :
- une évolution temporelle modélisée Ee de l'au moins une grandeur caractéristique C définie à partir de l'application du modèle M à l'au moins une valeur potentielle VPp de l'au moins un paramètre P, d'une part, et
- l'évolution temporelle observée Eo de la grandeur physique caractéristique C déterminée à partir de l'ensemble des valeurs de mesure VCm, d'autre part.

Selon l'exemple choisi, on peut sélectionner dans la population d'individus I ceux dont l'évaluation de la fonction de performance F(l) correspond à un plus faible écart entre l'évolution temporelle observée Eo et l'évolution temporelle modélisée Ee.

Il est ensuite possible de définir à partir de cette sélection une seconde génération d'individus I en déduisant de nouveaux individus par mutation des individus sélectionnés de la première génération en appliquant par exemple des modifications aléatoires ou en recombinant plusieurs individus sélectionnés de la première génération.

Une nouvelle évaluation de cette seconde génération est ensuite réalisée, puis une nouvelle sélection.

Il est possible de poursuivre cette évolution jusqu'à satisfaire un critère d'arrêt correspondant par exemple à un seuil donné de valeur de la fonction de performance F.

Cette démarche permet de définir ou de corriger l'au moins une valeur de paramètre VP en fonction d'un individu correspondant au résultat de l'algorithme évolutionnaire et présentant donc une valeur de fonction de performance satisfaisante.

Enfin, le procédé comprend une quatrième étape d) consistant à appliquer ou corriger une définition d'un fonctionnement de l'actionneur 1 en fonction de l'au moins une valeur VP de l'au moins un paramètre P déterminée ou corrigée à l'étape c).

Cette définition d'un fonctionnement de l'actionneur 1 peut par exemple comprendre la définition d'une commande R de positionnement de l'équipement mobile 2.

Le positionnement de l'équipement mobile 2 est réalisé par le moteur 6 de l'actionneur 1 qui est contrôlé par les moyens de contrôle 4.

Ainsi, les moyens de contrôle 4 se servent de l'au moins une valeur VP de l'au moins un paramètre P déterminée ou corrigée à l'étape précédente pour appliquer ou corriger une définition d'une commande R de positionnement de l'équipement mobile 2.

Nous allons à présent décrire trois exemples d'application d'un procédé selon l'invention.

Selon un premier exemple de mise en œuvre d'un procédé selon l'invention, un équipement mobile 2 du bâtiment de type volet battant est considéré. L'actionneur 1 associé à cet équipement mobile 2 est équipé d'un capteur 3 d'ensoleillement.

Le capteur 3 d'ensoleillement est disposé de telle sorte que son orientation par rapport à la façade du bâtiment sur lequel il est installé soit connue.

Cette orientation du capteur 3 correspond généralement à la même orientation géographique que celle de la façade du bâtiment sur lequel il est installé.

Ce capteur 3 se présente par exemple sous la forme d'un panneau photovoltaïque, utilisé pour la mesure et pour l'alimentation propre du capteur 3. Le relevé de courant aux bornes du panneau permet de représenter l'ensoleillement reçu par le panneau, qui s'apparente donc à la grandeur physique caractéristique C mesurée.

Les paramètres P considérés dans cet exemple sont relatifs à la date et l'heure dans l'année, et à l'orientation du capteur 3, le modèle M dans ce cas établissant la relation entre une grandeur physique C d'ensoleillement et un paramètre P d'orientation du capteur 3. Ce modèle M intègre notamment la règle selon laquelle l'ensoleillement moyen varie au cours d'une journée en un point fixe du globe terrestre.

Pour un capteur 3 orienté à l'Est, l'ensoleillement maximal sera le matin et pour un capteur 3 orienté à l'ouest, l'ensoleillement maximal sera l'après-midi.

Le nord ne recevra d'ensoleillement direct que tôt le matin ou tard le soir en été.

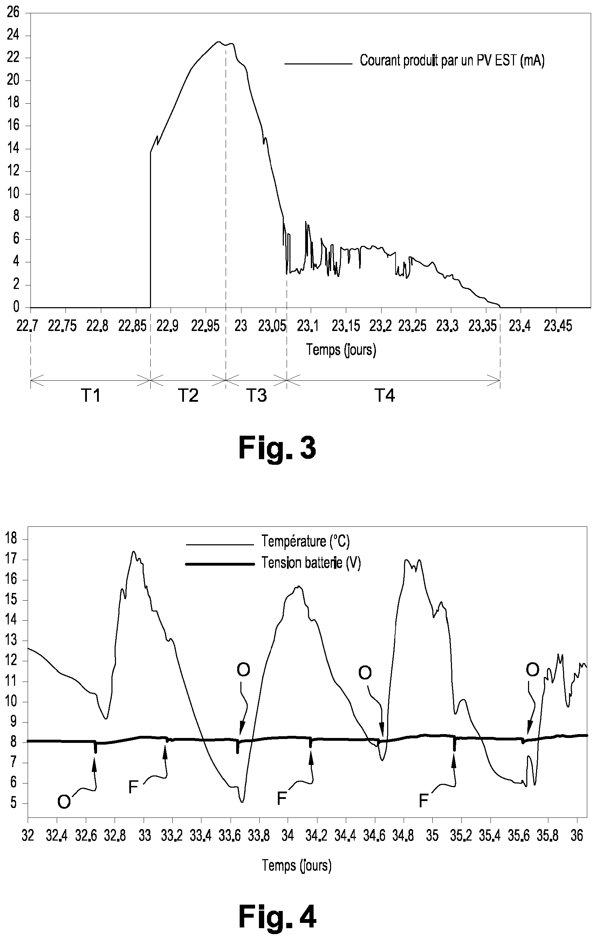

La figure 3 illustre les valeurs de mesure représentatives de l'ensoleillement VCm collectées sur un intervalle de mesure Tm s'étalant sur une journée à l'aide d'un capteur physique 3 installé sur le champ gauche d'une fenêtre orientée Sud-est.

Sur ce graphe, on distingue une première période T1 au cours de laquelle le capteur 3 ne détecte aucun ensoleillement du fait que le capteur 3 est masqué par le champ gauche de la fenêtre.

Cette première période T1 est suivie d'une deuxième période T2 au cours de laquelle le capteur 3 reçoit un ensoleillement direct rasant, puis d'une troisième période T3 au cours de laquelle le capteur 3 est progressivement masqué par le champ haut de la fenêtre.

Enfin, le graphe présente une dernière période T4 au cours de laquelle le capteur 3 reçoit un ensoleillement diffus.

L'ensoleillement maximal est atteint entre la deuxième période T2 et la troisième période T3.

Au cours de la troisième étape c) du procédé selon l'invention, une valeur VP du paramètre P d'orientation du capteur 3 est déterminée, pour laquelle l'application du modèle M correspond à une évolution temporelle modélisée Ee se rapprochant de l'évolution temporelle observée Eo sur le graphe de la figure 3 sur l'intervalle de mesure Tm au cours de laquelle ont été collectées l'ensemble des valeurs de mesure VCm.

L'orientation du capteur 3 est alors déterminée par rapport à la valeur déterminée VP de ce paramètre P.

Une fois cette orientation déterminée ou corrigée, les moyens de contrôle 4 appliquent ou corrigent une définition de commande R de positionnement, par exemple pour déclencher des scénarios de protections solaires comprenant la correction d'un horaire de déclenchement d'une commande de positionnement, en particulier d'une commande d'ouverture ou de fermeture d'un équipement mobile tel un volet ou un store.

Une fois déterminée, l'orientation du capteur 3 peut également être utilisée pour appliquer ou corriger d'autres définition de commande de positionnement pour d'autres actionneurs de volets disposés soit sur la même façade du bâtiment que le capteur 3, soit sur d'autres façades dont l'orientation par rapport à la façade sur laquelle est installé le capteur 3 est connue.

Par la suite, le procédé peut être remis en œuvre lors d'un intervalle de mesure Tm+1 ultérieur à l'intervalle de mesure Tm par exemple le jour suivant de manière à affiner, confirmer, infirmer ou ne pas prendre en compte la précision de l'orientation déterminée la veille.

En effet, il convient de ne pas prendre en compte ou d'infirmer cette première orientation si au cours d'intervalles de mesure Tm+x ultérieurs, cette première orientation apparait comme incohérente, c'est-à-dire que cette orientation ne converge pas vers une même orientation vers laquelle semble converger l'application du procédé au cours de ces intervalles de mesure Tm+x ultérieurs.

Bien entendu, l'infirmation de l'orientation peut concerner l'un quelconque des intervalles de mesure Tm+x.

Cependant, plus il y aura d'intervalles de mesure Tm+x sur lequel est appliqué le procédé, et plus la précision de l'orientation déterminée deviendra importante.

La durée moyenne de la journée évoluant de manière sinusoïdale au cours de l'année, le procédé selon l'invention permet également de suivre la progression temporelle de la journée au cours de l'année et donc de déduire une date de l'année.

Le modèle M prend donc en compte au moins une modélisation harmonique de l'évolution de l'au moins une grandeur physique caractéristique C sur une période d'évolution temporelle E pouvant par exemple aller d'une journée à une année, voire plusieurs années.

Selon un deuxième exemple de mise en œuvre d'un procédé selon l'invention, un équipement mobile 2 du bâtiment de type volet battant est considéré. L'actionneur 1 associé à l'équipement comprend un capteur de température 3.

Dans ce cas, le modèle M établit la relation entre une grandeur physique C de température et une combinaison de paramètres comprenant la résistance thermique d'un volet 2, les instants d'ouverture et fermeture d'un volet 2 et une modélisation harmonique de la température moyenne comprenant une période de 24 heures, une période annuelle et une période de l'ordre de quelques jours.

La figure 4 illustre les valeurs de mesure de température VCm collectées sur un intervalle de mesure Tm s'étalant sur plusieurs jours à l'aide d'un capteur physique 3 de température placé entre le volet 2 et la fenêtre.

Le graphe de la figure 4 indique également la tension d'une batterie alimentant l'actionneur 1 du volet 2 de manière à repérer sur le graphe les chutes de tension entrainées par la commande R de l'actionneur 1 lors de l'ouverture O ou de la fermeture F du volet 2.

C'est ainsi que l'on remarque que chaque ouverture O du volet 2 le matin s'accompagne d'une brève chute de température mesurée par le capteur 3, et chaque fermeture F le soir s'accompagne d'une brève stabilisation de la température.

Le modèle M utilisé intègre ces phénomènes de chute et de stabilisation de la température.

De même, l'étude des pentes de la courbe après l'ouverture du volet 2 et après la fermeture du volet 2 permettent de déduire la résistance thermique du volet 2.

La valeur de ces deux paramètres, correspondant à la résistance thermique du volet 2 et aux instants d'ouverture/fermeture du volet 2, est déterminée ou corrigée au cours de la troisième étape c) de manière à obtenir une évolution temporelle modélisée Ee correspondant ou se rapprochant de l'évolution temporelle observée Eo sur le graphe de la figure 4.

Selon un troisième exemple de mise en œuvre d'un procédé selon l'invention, un équipement mobile 2 du bâtiment de type store vénitien extérieur est considéré. L'actionneur 1 associé à l'équipement comprend un capteur d'ensoleillement 3.

Dans ce cas, le modèle M établit la relation entre une grandeur physique d'ensoleillement et une combinaison d'un premier paramètre P1 de position géographique du capteur 3 définie par sa latitude et sa longitude, un deuxième paramètre P2 d'orientation du capteur 3 par rapport au soleil ou azimut et un troisième paramètre P3 d'heure solaire.

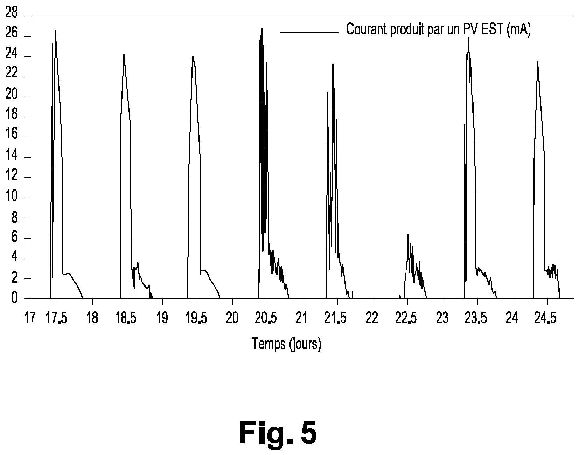

La figure 5 illustre les valeurs de mesure représentatives de l'ensoleillement VCm collectées sur un intervalle de mesure Tm s'étalant sur plusieurs jours à l'aide d'un capteur physique 3 d'ensoleillement placé en extérieur.

La position géographique du soleil ainsi que l'orientation du capteur 1 ont une influence sur l'amplitude des valeurs de mesure collectées de l'évolution observée Eo.

L'heure solaire mais également l'orientation ont quant à elles une influence sur la position dans le temps de l'évolution observée Eo.

Le modèle M utilisé intègre la position des pics d'intensité.

C'est ainsi que l'on peut déduire du graphe de la figure 5 une orientation du capteur 3 à partir de la position sur un intervalle correspondant à chaque journée, des différents pics d'intensité mesurée au cours d'un intervalle de mesure Tm correspondant à une semaine.

Ce graphe peut également permettre de déterminer une période de l'année dans laquelle se situe cette semaine de mesure en observant le décalage des différents pics au cours de cette semaine de mesure. En effet, la position des différents pics sur plusieurs jours successifs semble présenter un décalage qui croit vers la gauche, ce qui pourrait indiquer que le soleil se lève plus tôt et donc que l'intervalle de mesure Tm se situe entre le solstice d'hiver et le solstice d'été.

Sur ce graphe, les mesures observées au cours du 22ème jour ne seront pas prises en compte du fait du peu d'intensité relevé, ce qui peut être un indicateur de mauvais temps sur cette journée.

Selon un quatrième exemple non représenté sur les figures, l'ensemble de valeurs de mesure comprend des valeurs de mesure relatives à des actions de l'utilisateur correspondant à des instructions de commande saisies par l'utilisateur. Ces instructions peuvent en particulier correspondre à des ordres d'ouverture et de fermeture d'un volet par l'utilisateur. Les horaires d'ouverture et de fermetures permettent de déduire des plages de temps d'ensoleillement d'une fenêtre équipée du volet.

Selon une variante de cet exemple, il est possible de combiner des valeurs de mesures collectées par un capteur physique et des valeurs provenant du comportement de l'utilisateur pour déduire des valeurs de l'au moins une grandeur physique, par exemple de l'ensoleillement.

Pour réaliser la troisième étape c), le procédé peut utiliser un algorithme probabiliste comprenant un algorithme du type recuit simulé ou bien comprenant une inférence bayésienne.

## Revendications

1. Procédé de commande d'un actionneur pour un équipement mobile du bâtiment comprenant les étapes consistant à :
(a) Disposer d'un modèle (M) reliant au moins un paramètre (P) de modélisation à au moins une grandeur physique caractéristique (C) de l'environnement ou du fonctionnement de l'actionneur présentant une évolution temporelle (E),
(b) Collecter un ensemble de valeurs de mesure (VCm) relatives à l'au moins une grandeur physique caractéristique (C) de l'environnement ou du fonctionnement de l'actionneur au cours d'un intervalle de mesure (Tm), chaque valeur de mesure (VCm) étant associée à un instant (tm) de l'intervalle de mesure (Tm) ;
dans lequel l'ensemble des valeurs de mesure comprend des valeurs collectées par un capteur physique et des valeurs de mesure relatives à des actions de l'utilisateur correspondant à des instructions de commande saisies par l'utilisateur ;
(c) Déterminer ou corriger au moins une valeur (VP) de l'au moins un paramètre (P) de modélisation de manière à ce qu'une évolution temporelle modélisée (Ee) définie à partir de l'application du modèle (M) à l'au moins une valeur (VP) de paramètre (P) de modélisation corresponde à ou se rapproche d'une évolution temporelle observée (Eo) de la grandeur physique caractéristique (C) déterminée à partir de l'ensemble des valeurs de mesure (VCm) ;
(d) Appliquer ou corriger une définition d'un fonctionnement de l'actionneur (1) en fonction de l'au moins une valeur (VP) de l'au moins un paramètre (P) déterminée ou corrigée à l'étape c) ;
tel que l'étape c) comprend l'utilisation d'un algorithme probabiliste.

2. Procédé selon la revendication 1, dans lequel le modèle (M) utilisé prend en compte au moins une modélisation harmonique de l'évolution de l'au moins une grandeur physique caractéristique (C), de telle sorte à permettent de tenir compte de la périodicité ou de la pseudo-périodicité de l'évolution de l'au moins une grandeur physique caractéristique.

3. Procédé selon l'une des revendications précédentes, dans lequel l'ensemble des valeurs de mesure (VCm) comprend des valeurs correspondant à une grandeur physique caractéristique (C) d'ensoleillement / de puissance solaire reçue et/ou de température ambiante.

4. Procédé selon l'une des revendications précédentes, dans lequel l'au moins un paramètre (P) correspond à une estimation d'une position géographique, et/ou d'une orientation par rapport à un référentiel géographique, et/ou de l'heure ou de la date.

5. Procédé selon la revendication 1, dans lequel l'algorithme probabiliste comprend un algorithme évolutionnaire, notamment de type génétique, comprenant une étape de définition d'une population d'individus (I), chaque individu correspondant à une structure de données regroupant des valeurs potentielles (VPp) de l'au moins un paramètre (P).

6. Procédé selon la revendication 5, dans lequel l'algorithme évolutionnaire comprend une étape d'évaluation d'une fonction de performance correspondant au calcul d'un écart entre :
- une évolution temporelle modélisée (Ee) de l'au moins une grandeur caractéristique (C) définie à partir de l'application du modèle (M) à l'au moins une valeur potentielle (VPp) de l'au moins un paramètre (P), d'une part, et
- l'évolution temporelle observée (Eo) de la grandeur physique caractéristique (C) déterminée à partir de l'ensemble des valeurs de mesure (VCm), d'autre part.

7. Procédé selon l'une des revendications précédentes, dans lequel l'étape c) comprend une étape de traitement du signal, en particulier une étape de filtrage et/ou de calcul de dérivée, sur l'ensemble de valeurs de mesure (VCm) de l'au moins une grandeur caractéristique (C).

8. Procédé selon l'une des revendications précédentes dans lequel l'étape c) comprend une étape de calcul de la déviation de motifs d'un signal formé par l'ensemble des valeurs de mesure (VCm) présentant une périodicité donnée.

9. Procédé selon l'une des revendications 1 et 5 à 8 dans lequel l'étape de traitement du signal et/ou l'étape de calcul de déviation des motifs est réalisée préalablement à l'application d'un algorithme probabiliste.

10. Procédé selon l'une des revendications précédentes, dans lequel la définition d'un fonctionnement de l'actionneur (1) comprend la définition d'une commande (R) de positionnement de l'équipement mobile (2).

11. Procédé selon la revendication 10, dans lequel la correction de la définition d'une commande (R) de positionnement correspond à la correction d'un horaire de déclenchement d'une commande de positionnement, en particulier d'une commande d'ouverture d'un équipement mobile (2).

12. Procédé selon l'une des revendications 10 ou 11, dans lequel l'étape d) comprend les étapes consistant à :
- déterminer une orientation relative de l'équipement mobile (2) par rapport au soleil en fonction de l'au moins une valeur de paramètre (P) ;
- appliquer une commande (R) de positionnement de l'équipement mobile (2) en fonction de l'orientation relative déterminée.

13. Procédé selon l'une des revendications précédentes, dans lequel la définition d'un fonctionnement de l'actionneur (1) comprend la définition d'une commande (R) de la variation d'une vitesse de l'actionneur (1).

14. Actionneur (1) d'un équipement mobile (2) du bâtiment agencé pour mettre en oeuvre un procédé de commande selon l'une des revendications précédentes comprenant un capteur et/ou une interface utilisateur (3) agencé pour collecter des valeurs de mesure (VCm) de l'au moins une grandeur physique caractéristique (C).

## Patentansprüche

1. Verfahren zur Steuerung eines Stellantriebs für eine mobile Anlage in einem Gebäude, umfassend die folgenden Schritte:
(a) Anordnen eines Modells (M), das mindestens einen Modellierungsparameter (P) mit mindestens einer physischen Kenngröße (C) der Umgebung oder der Funktion des Stellantriebs, die eine temporäre Entwicklung (E) aufweist, verbindet,
(b) ein Erfassen einer Gruppe von Messwerten (VCm) in Bezug auf die mindestens eine physische Kenngröße (C) der Umgebung oder der Funktion des Stellantriebs im Laufe eines Messintervalls (Tm), wobei jeder Messwert (VCm) einem Zeitpunkt (tm) des Messintervalls (Tm) zugeordnet ist;
wobei die Gruppe von Messwerten Werte, die von einem physischen Sensor erfasst werden, und Messwerte in Bezug auf Maßnahmen des Nutzers entsprechend den vom Nutzer ergriffenen Steuerbefehlen, umfasst;
(c) ein Bestimmen oder Korrigieren von mindestens einem Wert (VP) des mindestens einen Modellierungsparameters (P), so dass eine basierend auf der Anwendung des Models (M) auf den mindestens einen Wert (VP) des Modellierungsparameters (P) definierte modellierte temporäre Entwicklung (Ee) einer beobachteten temporären Entwicklung (Eo) der physischen Kenngröße (C), die basierend auf der Gruppe von Messwerten (VCm) bestimmt wird, entspricht oder sich dieser annähert;
(d) ein Anwenden oder Korrigieren einer Definition der Funktionsweise des Stellantriebs (1) in Abhängigkeit von dem in Schritt c) bestimmten oder korrigierten mindestens einen Wert (VP) des mindestens einen Parameters (P);
so dass Schritt c) die Anwendung eines probabilistischen Algorithmus umfasst.

2. Verfahren nach Anspruch 1, wobei das verwendete Modell (M) mindestens eine harmonische Modellierung der Entwicklung der mindestens einen physischen Kenngröße (C) berücksichtigt, so dass die Periodizität oder die Pseudo-Periodizität der Entwicklung der mindestens einen physischen Kenngröße berücksichtigt werden kann.

3. Verfahren nach einem der vorangehenden Ansprüche, wobei die Gruppe von Messwerten (VCm) Werte umfasst, die einer physischen Kenngröße (C) der Sonneneinstrahlung/der empfangenen Solarleistung und/oder der Umgebungstemperatur entsprechen.

4. Verfahren nach einem der vorangehenden Ansprüche, wobei der mindestens eine Parameter (P) einer Schätzung einer geographischen Position und/oder einer Ausrichtung bezüglich einer geographischen Referenz und/oder der Stunde oder des Datums entspricht.

5. Verfahren nach Anspruch 1, wobei der probabilistische Algorithmus einen evolutionären Algorithmus umfasst, insbesondere vom genetischen Typ, umfassend einen Schritt der Definition einer Population von Individuen (I), wobei jedes Individuum einer Datenstruktur entspricht, die potentielle Werte (VPₚ) des mindestens einen Parameters (P) neu gruppiert.

6. Verfahren nach Anspruch 5, wobei der evolutionäre Algorithmus einen Schritt der Evaluierung einer Leistungsfunktion entsprechend der Berechnung eines Abstands zwischen:
- einer modellierten temporären Entwicklung (Ee) der mindestens einen physischen Kenngröße (C), die basierend auf der Anwendung des Modells (M) auf den mindestens einen potentiellen Wert (VPₚ) des mindestens einen Parameters (P) definiert wird, einerseits, und
- der beobachteten temporären Entwicklung (Eo) der physischen Kenngröße (C), die basierend auf der Gruppe von Messwerten (VCm) bestimmt wird, andererseits,
umfasst.

7. Verfahren nach einem der vorangehenden Ansprüche, wobei der Schritt c) einen Schritt der Signalverarbeitung, insbesondere einen Schritt des Filterns und/oder Berechnens der Ableitung, an der Gruppe von Messwerten (VCm) der mindestens einen Kenngröße (C) umfasst.

8. Verfahren nach einem der vorangehenden Ansprüche, wobei der Schritt c) einen Schritt des Berechnens der Abweichung von Mustern eines Signals umfasst, die durch die Gruppe von Messwerten (VCm) gebildet wird, die eine gegebene Periodizität aufweisen.

9. Verfahren nach einem der Ansprüche 1 und 5 bis 8, wobei der Schritt der Signalverarbeitung und/oder der Schritt der Berechnung der Abweichung von Mustern vor der Anwendung eines probabilistischen Algorithmus ausgeführt wird.

10. Verfahren nach einem der vorangehenden Ansprüche, wobei die Definition der Funktion eines Stellantriebs (1) die Definition eines Positionierungsbefehls (R) der mobilen Anlage (2) umfasst.

11. Verfahren nach Anspruch 10, wobei die Korrektur der Definition eines Positionierungsbefehls (R) der Korrektur einer Zeitangabe zur Auslösung eines Positionierungsbefehls, insbesondere eines Befehls zum Öffnen einer mobilen Anlage (2) entspricht.

12. Verfahren nach einem der Ansprüche 10 oder 11, wobei der Schritt d) die folgenden Schritte umfasst:
- Bestimmen einer relativen Ausrichtung der mobilen Anlage (2) bezüglich der Sonne in Abhängigkeit von dem mindestens einen Parameterwert (P);
- Anwenden eines Positionierungsbefehls (R) der mobilen Anlage (2) in Abhängigkeit von der bestimmten relativen Ausrichtung.

13. Verfahren nach einem der vorangehenden Ansprüche, wobei die Definition einer Funktion des Stellantriebs (1) die Definition eines Befehls (R) zur Variation einer Geschwindigkeit des Stellantriebs (1) umfasst.

14. Stellantrieb (1) einer mobilen Anlage Elements (2) des Gebäudes, der angeordnet ist, um ein Steuerverfahren nach einem der vorangehenden Ansprüche umzusetzen, umfassend einen Sensor und/oder eine Nutzerschnittstelle (3), der bzw. die angeordnet ist, um Messwerte (VCm) der mindestens einen physischen Kenngröße (C) zu erfassen.

## Claims

1. A method for controlling an actuator for a building mobile equipment comprising the steps consisting in:
(a) providing a model (M) connecting at least one modeling parameter (P) to at least one characteristic physical quantity (C) of the environment or of the operation of the actuator having a time evolution (E),
(b) collecting a set of measurement values (VCm) relating to the at least one characteristic physical quantity (C) of the environment or of the operation of the actuator during a measurement interval (Tm), each measurement value (VCm) being associated with an instant (tm) of the measurement interval (Tm);
wherein the set of the measurement values comprises values collected by a physical sensor and measurement values relating to user's actions corresponding to control instructions input by the user;
(c) determining or correcting at least one value (VP) of the at least one modeling parameter (P) so that a modeled time evolution (Ee) defined from the application of the model (M) to the at least one modeling parameter (P) value (VP) corresponds to or approaches an observed time evolution (Eo) of the characteristic physical quantity (C) determined from the set of the measurement values (VCm);
(d) applying or correcting a definition of an operation of the actuator (1) as a function of the at least one value (VP) of the at least one parameter (P) determined or corrected in step c);
such that step c) comprises the use of a randomized algorithm.

2. The method according to claim 1, wherein the used model (M) takes into account at least one harmonic modeling of the evolution of the at least one characteristic physical quantity (C), so as to make it possible to take into account the periodicity or the pseudo-periodicity of the evolution of the at least one characteristic physical quantity.

3. The method according to any of the preceding claims, wherein the set of measurement values (VCm) comprises values corresponding to a characteristic physical quantity (C) of insolation/received solar power and/or of ambient temperature.

4. The method according to any of the preceding claims, wherein the at least one parameter (P) corresponds to an estimate of a geographical position, and/or of an orientation with respect to a geographic reference frame, and/or of the time or the date.

5. The method according to claim 1, wherein the randomized algorithm comprises an evolutionary algorithm, in particular of the genetic type, comprising a step of defining a population of individuals (I), each individual corresponding to a data structure involving potential values (VPp) of the at least one parameter (P).

6. The method according to claim 5, wherein the evolutionary algorithm comprises a step of evaluating a performance function corresponding to the calculation of a difference between:
- a modeled time evolution (Ee) of the at least one characteristic quantity (C) defined from the application of the model (M) to the at least one potential value (VPp) of the at least one parameter (P), on the one hand, and
- the observed time evolution (Eo) of the characteristic physical quantity (C) determined from the set of measurement values (VCm), on the other hand.

7. The method according to any of the preceding claims, wherein step c) comprises a signal processing step, in particular a filtering and/or derivative calculation step, on the set of measurement values (VCm) of the at least one characteristic quantity (C).

8. The method according to any of the preceding claims, wherein step c) comprises a step of calculating the deviation of patterns of a signal formed by the set of measurement values (VCm) having a given periodicity.

9. The method according to any of claims 1 and 5 to 8, wherein the signal processing step and/or the pattern deviation calculation step is carried out prior to the application of a randomized algorithm.

10. The method according to any of the preceding claims, wherein the definition of an operation of the actuator (1) comprises the definition of a positioning control (R) of the mobile equipment (2).

11. The method according to claim 10, wherein the correction of the definition of a positioning control (R) corresponds to the correction of a time for triggering a positioning control, in particular an opening control of a mobile equipment (2).

12. The method according to any of claims 10 and 11, wherein step d) comprises the steps consisting in:
- determining a relative orientation of the mobile equipment (2) with respect to the sun according to the at least one parameter value (P);
- applying a control (R) for positioning the mobile equipment (2) according to the determined relative orientation.

13. The method according to any of the preceding claims, wherein the definition of an operation of the actuator (1) comprises the definition of a control (R) of the variation of a speed of the actuator (1).

14. An actuator (1) of a building mobile equipment (2) arranged to implement a control method according to any of the preceding claims comprising a sensor and/or a user interface (3) arranged to collect measurement values (VCm) of the at least one characteristic physical quantity (C).
